# EUROPEAN PATENT APPLICATION

(11) **EP 4 693 456 A1**
(43) Date of publication of application: **11.02.2026**
(21) Application number: 25193687.8
(22) Date of filing: 04.08.2025
(51) Int. Cl.: H01M 4/24, H01M 4/66, H01M 6/04

(54) **ACETATE ELECTROLYTES FOR RECHARGEABLE AQUEOUS ZINC-ION CELLS AND BATTERIES**

(30) Priority: 02.08.2024 US 202463678875 P
(71) Applicant: Salient Energy Inc., Dartmouth NS B3B 1C4 (CA)
(72) Inventor: Adams, Brian, Dartmouth, B3B 1C4 (CA); Elliott, Mark, Dartmouth, B3B 1C4 (CA); Galvan, Sarah, Dartmouth, B3B 1C4 (CA); Tytus, John, Dartmouth, B3B 1C4 (CA); Yu, Haonan, Dartmouth, B3B 1C4 (CA)
(74) Representative: Humphrey-Evans, Edward John

(57) **Abstract**

A secondary electrochemical cell for storing and delivering electrical energy is provided herein. The cell includes a negative electrode comprising a surface exposed to an aqueous electrolyte; the aqueous electrolyte for transferring zinc(II) (Zn²⁺) ions between the negative electrode and a positive electrode, the aqueous electrolyte including: zinc acetate dissolved in water, an additional acetate salt dissolved in water, and acetic acid dissolved in water; and the positive electrode undergoes a redox reaction with the Zn²⁺ ions. A combination of the additional acetate salt and the acetic acid is used to buffer a pH of the aqueous electrolyte.

## Description

### Technical Field

The following relates generally to electrochemical cells, and more particularly to electrochemical cells that use metallic zinc as the negative electrode, a positive electrode which undergoes a redox reaction with Zn²⁺, and an aqueous electrolyte that shuttles Zn²⁺ between the two electrodes during discharge and charge.

### Introduction

Metallic zinc negative electrodes are used in many primary (non-rechargeable) and secondary (rechargeable) aqueous battery types. Zinc has a high abundance and large production which makes it inexpensive; it is non-toxic; has a low redox potential (-0.76 V vs. standard hydrogen electrode (SHE)) compared to other negative electrode materials used in aqueous batteries; and is stable in water due to a high overpotential for hydrogen evolution.

Many traditional aqueous batteries using zinc metal electrodes, such as alkaline batteries and zinc-carbon batteries, use alkaline electrolytes. Commonly, in alkaline electrolytes, a dendritic morphology of zinc deposits is observed. Dendrites are particularly problematic because of the high surface area and ease of penetration through separators. In addition to dendrite growth, the low coulombic efficiency (CE) of zinc metal plating/stripping is also a major challenge. This has inhibited these primary (non-rechargeable) battery types from being recharged. Many new battery chemistries including zinc-air batteries, zinc-ion batteries, zinc hybrid supercapacitors, zinc-bromide batteries, zinc-iodide batteries, zinc-iron redox flow batteries, and zinc-cerium redox flow batteries may use acidic electrolytes rather than alkaline electrolytes.

Most rechargeable zinc batteries - such as the rechargeable alkaline-manganese batteries (RAM, alkaline Zn-MnO2) - also operate in a KOH-based alkaline electrolyte. At the negative electrode, zinc metal is converted to insulating zinc oxide during discharge (Zn + 2OH-→ ZnO + H2O + 2e-) while the positive electrode material oxide is reduced with water to generate hydroxide ions in another conversion reaction (ex: MnO2 + H2O + e- → MnOOH + OH- in a RAM, ½ O2 + H2O + 2e- → 2OH- in a zinc-air battery, or NiOOH + H2O + e- → Ni(OH)2 + OH-in a nickel-zinc battery). As illustrated in the three examples above, zinc is not involved in the positive electrode reaction(s) in any way.

The zinc-ion battery differs drastically from its predecessor zinc-based batteries, mainly owing to its near-neutral pH electrolyte. At the negative electrode, direct plating and stripping of zinc metal occurs (Zn ↔ Zn2+ + 2e-) as opposed to conversion to ZnO. The electrolyte serves the purpose of shuttling/transporting Zn2+ cations back and forth between the positive and the negative electrodes. At the positive electrode during discharge, the Zn2+ are intercalated into the crystal structure of a material or react directly in some way with the material as opposed to the alkaline examples described above where the electrolyte transport species is OH⁻.

Accordingly, there is a need for improved electrolytes for rechargeable zinc-ion batteries which overcome at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A secondary electrochemical cell for storing and delivering electrical energy is provided. The cell includes a negative electrode comprising a surface exposed to an aqueous electrolyte; the aqueous electrolyte for transferring zinc(II) (Zn2+) ions between the negative electrode and a positive electrode, the aqueous electrolyte including: zinc acetate dissolved in water, an additional acetate salt dissolved in water, and acetic acid dissolved in water; and the positive electrode undergoes a redox reaction with the Zn2+ ions. A combination of the additional acetate salt and the acetic acid is used to buffer a pH of the aqueous electrolyte.

In an embodiment, the surface is one of: a zinc metal surface; and a zinc alloy surface.

In an embodiment, the zinc acetate in solution is between 0.05 to 4 molar zinc cations (Zn2+).

In an embodiment, the additional acetate salt in solution is between 0.05 to 30 molar acetate anions (CH3COO-).

In an embodiment, the additional acetate salt includes at least one of: lithium acetate; sodium acetate; potassium acetate; magnesium acetate; calcium acetate; aluminum acetate; ammonium acetate; tetramethylammonium acetate; tetraethylammonium acetate; tetrabutylammonium acetate; and manganese acetate.

In an embodiment, the acetic acid in solution is between 0.05 to 15 molar concentration.

In an embodiment, the aqueous electrolyte includes at least one additive dissolved in water.

In an embodiment, the additive in solution is between 100 to 100,000 ppm quantities.

In an embodiment, the at least one additive includes at least one chemical functional group of alkyl; alkenyl; alkynyl; phenyl; amine; hydroxyl; ether; thiol; aldehyde; ketone; ester; carboxyl; amide; siloxyl; halo; imine; and imide.

In an embodiment, the at least one additive includes at least one of: ethylvanillin; sodium dodecyl sulfate; polyethylene glycol; dextrin; polyacrylamide; guar gum; and butanediol.

In an embodiment, the at least one additive controls a morphology of the surface of the negative electrode, wherein the surface is one of: stripped; and plated.

In an embodiment, the aqueous electrolyte includes a co-solvent.

In an embodiment, the co-solvent is an organic solvent.

In an embodiment, the organic solvent is one of: a non-polar solvent; and a polar solvent.

In an embodiment, the organic solvent in solution is between 0.05 to 90 percent concentration.

In an embodiment, the negative electrode comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode includes an active material layer applied to the positive electrode current collector.

In an embodiment, the active material includes a metal oxide.

In an embodiment, the metal oxide includes redox active metal centers of manganese, nickel, vanadium, cobalt, copper, iron, or chromium.

In an embodiment, the active material includes an organic molecule.

In an embodiment, the organic molecule includes a quinone molecule.

In an embodiment, the aqueous electrolyte has a pH between 3 and 6.

In an embodiment, a combination of an acetate salt and acetic acid is used to buffer a pH of the aqueous electrolyte.

In an embodiment, the cell further includes a separator between the negative electrode and the positive electrode to electrically insulate the negative electrode and the positive electrode.

In an embodiment, the separator at least one of: is porous; and contains the aqueous electrolyte.

In an embodiment, an average discharge voltage of the cell is between 0.5 V and 1.8 V.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an example rechargeable zinc metal battery during discharge, according to an embodiment;
Figure 2A is a Pourbaix diagram for an aqueous solution of zinc sulfate, according to an embodiment;
Figure 2B is a Pourbaix diagram for an aqueous solution of zinc acetate, according to an embodiment;
Figure 3 depicts titration curves (pH vs. [OH⁻] added) for different electrolyte compositions, according to an embodiment;
Figures 4A and 4B are schematic diagrams of zinc-ion cell configurations used to evaluate electrolytes, according to an embodiment;
Figure 5 is a graph of a voltage profile for the first discharge/charge cycle of a zinc-ion cell, according to an embodiment;
Figure 6 depicts linear sweep voltammograms of cells with different positive electrode current collectors using the half-cell configuration of Figure 4B, according to an embodiment;
Figure 7 depicts in-situ pH measurements for full cells and half cells with 2M ZnSO4 and a buffered acetate-based electrolyte, according to an embodiment;
Figure 8A is a graph of capacity retention (%) vs. cycle number for zinc-ion cells using acetate electrolytes buffered to different pH values, according to an embodiment;
Figure 8B is a graph of specific capacity (mAh/g) vs. cycle number for zinc-ion cells using acetate electrolytes buffered to different pH values, according to an embodiment;
Figures 9A, 9B, 9C and 9D are voltage vs. time plots of zinc-ion cells using electrolytes with different non-zinc acetate salts, according to an embodiment;
Figure 9B is a flowchart of a method based on the example procedure of Figure 9A, according to an embodiment;
Figure 10A, 10B and 10C are scanning electron microscope images of positive electrode surfaces extracted from zinc-ion cells, according to an embodiment;
Figure 11 is a graph of coulombic efficiency for plating and stripping zinc in half cells containing two different electrolytes, according to an embodiment;
Figures 12A and 12B are depictions of the typical morphology of zinc after cycling in a sulfate-based electrolyte, according to an embodiment;
Figures 13A and 13B are depictions of the morphology of zinc after 10 cycles in a half cell containing 1 M zinc acetate, 0.5 M acetic acid, and 0.8 M sodium acetate dissolved in water electrolyte, according to an embodiment; and
Figures 14A and 14B are depictions of the morphology of zinc after 10 cycles in a half cell containing 1 M zinc acetate, 0.5 M acetic acid, and 0.8 M sodium acetate with 3 wt. % polyethylene glycol (PEG) additive dissolved in water electrolyte, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes and methods may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

The following relates generally to electrochemical cells, and more particularly to electrochemical cells that use metallic zinc as the negative electrode, a positive electrode which undergoes a redox reaction with Zn²⁺, and an aqueous electrolyte that shuttles Zn²⁺ between the two electrodes during discharge and charge.

A novel electrolyte composition is described for zinc-ion batteries in US 2020/0176198 A1 ("Adams"). A sulfate anion was preferred in the electrolyte composition of Adams since it is significantly less corrosive compared to the chloride anion, sulfate compounds are inexpensive and have a wide electrochemical stability window.

Adams discloses an apparatus for a rechargeable battery which can include: a negative electrode including zinc; and an electrolyte for transferring ions between the negative electrode and a positive electrode, the electrolyte including zinc sulfate dissolved in water with a pH in the range of 0-7, and at least one additive. The at least one additive can be selected to at least one of (i) increase ionic conductivity of the electrolyte, (ii) buffer the pH of the electrolyte, and (iii) control morphology of a stripped / plated surface of the negative electrode.

Boric acid acted as the buffering agent in Adams by reacting with hydroxide ions formed during cycling through side reactions. Boric acid is a weak acid which can consume hydroxide ions to form borate anions, but its buffering capacity is quite limited without the inclusion of a corresponding conjugate base. Boric acid is a polyprotic compound which can lose three protons. The pKa values for boric acid are 9.24 (first proton), 12.4 (second proton), and 13.3 (complete).

When choosing a buffer for use at a specific pH, it should have a pKa value as close as possible to that pH. For the zinc-ion battery, the ideal pH range for the electrolyte is 4-6. A mixture of acetic acid and an acetate salt is slightly acidic because the acid dissociation constant, Kₐ, of acetic acid is greater than the K_{b} of its conjugate base acetate. It is a buffer because it contains both the weak acid and its salt. It acts to keep the hydronium ion concentration (and the pH) almost constant by the addition of either a small amount of a strong acid or a strong base. Acetic acid has a pKa value of 4.756 and buffer solutions can be prepared in the pH range of approximately 3.5 to 6.0.

As disclosed herein, zinc metal negative electrodes and aqueous electrolytes may be used in a rechargeable battery. The electrolyte may include zinc acetate dissolved in water with a pH in the range of 4-6 to provide Zn2+ ions. The electrolyte may include a combination of a non-zinc acetate salt and acetic acid to buffer the pH of the electrolyte. The electrolyte may include one or more additional additives to control the morphology of a stripped/plated zinc surface of the negative electrode.

Techniques disclosed herein may thus improve the performance of secondary electrochemical cells that use a zinc metal negative electrode, an aqueous electrolyte having a pH between 4 and 6, and a positive electrode which undergoes a redox reaction with Zn²⁺ ions.

The improved electrolyte for rechargeable zinc-ion batteries disclosed may include acetate anions as the sole anionic species in its composition and may be buffered in the pH range between 4 and 6.

Advantageously, the acetate anions may reduce corrosion of current collectors and reduce the formation of dendrites, while the pH-buffering agent(s) may decrease the likelihood of electrolyte instability and subsequent side reactions during cycling caused by fluctuations in pH during cycling.

Moreover, the additional additives may decrease the likelihood of internal short circuits caused by volumetric expansion of the negative electrode and morphology changes after repeated cycling and penetration of zinc metal through a separator to a positive electrode.

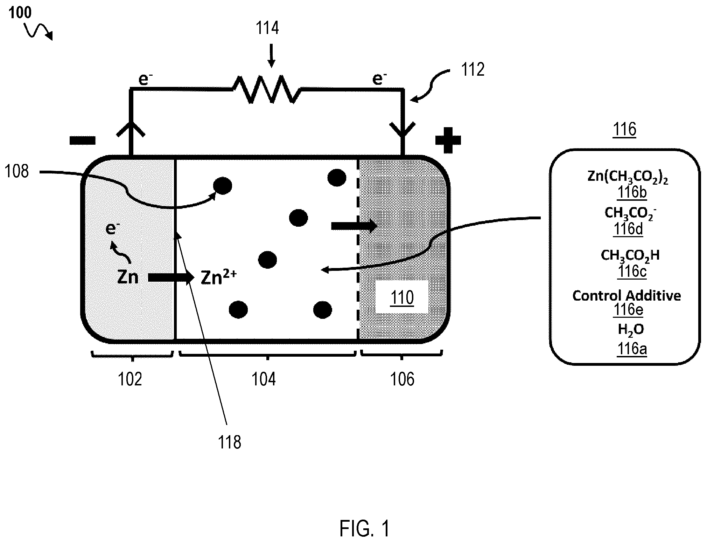

Referring now to Figure 1, shown therein is schematic diagram of a secondary electrochemical cell (battery) 100 during discharge, according to an embodiment.

The secondary electrochemical battery 100 may be a rechargeable zinc battery.

The secondary electrochemical battery 100 may be for storing and delivering electrical energy.

The battery 100 includes a negative electrode 102, an aqueous electrolyte 104, and a positive electrode 106.

The negative electrode 102 includes a surface 118 exposed to the aqueous electrolyte 104.

The negative electrode 102 may correspond to zinc metal that is oxidized into zinc(II) (Zn²⁺) cations 108 during discharge.

The aqueous electrolyte 104 may be for transferring Zn²⁺ ions 108 between the negative electrode 102 and the positive electrode 106.

In an embodiment, the aqueous electrolyte 104 includes zinc acetate 116b dissolved in water 116a.

In an embodiment, the aqueous electrolyte 104 further includes at least one additional acetate salt 116d dissolved in water 116a.

In an embodiment, the aqueous electrolyte 104 further includes acetic acid 116c dissolved in water 116a.

In an embodiment, a combination of the additional acetate salt 116d and the acetic acid 116c is used to buffer a pH of the aqueous electrolyte 104.

The active material 110 is used as positive electrode 106 active material. The positive electrode 106 may include at least one redox active organic material 110 molecule.

During discharge, the negative electrode 102, which corresponds to zinc metal, is oxidized into Zn²⁺ cations 108 that solvate and migrate through the electrolyte 104. Electrons supplied from the oxidation of zinc metal in the negative electrode 102 flow through the external circuit 112, delivering power to an electrical load 114.

At the positive electrode 106, the active material 110 is reduced by electrons transported through the external circuit 112

The solvated zinc cations 108 electrochemically interact with the reduced active material 110 of the positive electrode 106.

In a rechargeable zinc metal battery, the zinc metal oxidation (also referred to as stripping) and the Zn²⁺ interaction with the positive electrode active material is fully reversible.

During charge, the Zn²⁺ detach from the positive electrode 106 active material's active site and diffuse through the electrolyte 104 and are reduced to zinc metal in the negative electrode 102 (also referred to as plating).

The individual components of the electrolyte 104 are listed in the expanded panel 116.

An example set of electrolyte components 116 may include: water (H₂O) 116a as a main solvent; zinc acetate (Zn(CH₃CO₂)₂ 116b; acetic acid (CH₃CO₂H) 116c; a non-zinc acetate salt providing acetate anions (CH₃CO₂⁻) 116d; and one or more additives 116e to smooth the morphology of the surface 118 of the zinc negative electrode 102.

According to certain embodiments, any or all of the depicted electrolyte components 116 may be present in the electrolyte 104, or only a subset of the electrolyte components 116. Further, the electrolyte 104 may contain multiple varieties of certain electrolyte components 116, such as various non-zinc acetate salts 116d, for example.

In an embodiment, the electrolyte 104 compositions for aqueous zinc-ion batteries are typically zinc sulfate, zinc trifluoromethanesulfonate (zinc triflate), and zinc di[bis(trifluoromethylsulfonyl)imide] (ZnTFSI).

These salts are employed because of their high-water solubility, high ionic conductivity, and good anodic stability within the voltage range of the zinc-ion system.

The typical pH of solutions formed when these salts are dissolved in water is in the range of 4-6.

Electrolytes 104 based on the above salts suffer from gradual consumption due to side reactions which occur at both the negative and positive electrode. In particular, evidence of the buildup of hydroxy double salts has been shown.

At the negative electrode 102, the formation of hydroxy double salts (HDSs) occurs via a reaction in the presence of zinc metal, water, and electrolyte anions. The general formula for these HDS is Znₓ(OH)_{y}(A)_{z}•nH₂O, where A is the anion in the electrolyte.

Using aqueous zinc sulfate (ZnSO₄) electrolyte as an example aqueous electrolyte 104, the side products formed at the negative electrode 102 are zinc hydroxy sulfate (ZHS) and hydrogen gas as a result of this reaction: 3Zn + ZnSO₄ + 10H₂O → Zn₄(OH)₆(SO₄)•4H₂O + 3H₂.

At the positive electrode 106, local pH changes which can occur during regular cycling of a zinc-ion cell can lead to the formation of OH- and the same HDS precipitate in the presence of an abundance of both Zn2+ and anions (as well as water molecules) in the electrolyte 104 (e.g., 4Zn²⁺ + SO₄²⁻ + 6OH⁻ + 4H₂O → Zn₄(OH)₆(SO₄)•4H₂O).

Preventing or slowing the formation of HDSs (zinc hydroxy sulfate, zinc hydroxy acetate, etc.) is paramount in achieving long cycle and calendar life in zinc-ion batteries.

Table 1 below shows all the acetate-based electrolytes evaluated in this disclosure. A sulfate-based electrolyte is prepared as a comparative example by dissolving 2M zinc sulfate salt (2M ZnSO₄) in water. The 2M ZnSO₄ had an initial pH between 4.0 and 4.5 and an ionic conductivity of 55 mS/cm.

**Table 1. Composition, pH, and ionic conductivity of various acetate-based electrolytes.**

| Electrolyte | Zinc acetate concentration (mol/L) | Acetic acid concentration (mol/L) | Non-zinc acetate salt | Non-zinc acetate salt concentration (mol/L) | Control additive | Control additive concentration | Initial pH | Ionic conductivity (mS/cm) |
|---|---|---|---|---|---|---|---|---|
| E1 | 1 | 0.5 | Sodium acetate | 0.8 | - | - | 4.8 | 27 |
| E2 | 1 | 0.5 | Sodium acetate | 0.8 | Polyethylene glycol (PEG300) | 2 wt.% | 5.0 | 28 |
| E3 | 1 | 0.5 | Sodium acetate | 0.8 | Ethyl vanillin | 200 ppm | 4.9 | 29 |
| E4 | 1 | 0.5 | Sodium acetate | 0.8 | Sodium dodecyl sulfate (SDS) | 100 ppm | 4.9 | 29 |
| E5 | 1 | 0.5 | Sodium acetate | 0.8 | Dextrin | 3 g/L | 5.0 | 29 |
| E6 | 1 | 0.5 | Sodium acetate | 0.8 | Polyacrylamide (PAM) | 3 g/L | 5.0 | 29 |
| E7 | 1 | 0.5 | Sodium acetate | 0.8 | Guar gum | 1 wt.% | 5.0 | 29 |
| E8 | 1 | 0.5 | Sodium acetate | 0.8 | Butanediol | 2 vol.% | 5.0 | 29 |
| E9 | 1 | 0.5 | Potassium acetate | 0.2 | - | - | 4.7 | - |
| E10 | 1 | 0.5 | Potassium acetate | 0.8 | - | - | 5.0 | - |
| E11 | 1 | 0.5 | Ammonium acetate | 0.2 | - | - | 4.7 | - |
| E12 | 1 | 0.5 | Ammonium acetate | 0.8 | - | - | 5.0 | - |
| E13 | 1 | 0.5 | Lithium acetate | 0.2 | - | - | 4.6 | - |
| E14 | 1 | 0.5 | Lithium acetate | 0.8 | - | - | 4.8 | - |
| E15 | 1 | 2 | Sodium acetate | 0.8 | - | - | 4.0 | - |
| E16 | 1 | 0.1 | Sodium acetate | 0.8 | - | - | 5.6 | - |

In an embodiment, the active material 110 is electrochemically grafted onto an insoluble support.

In an embodiment, the surface 118 is one of: a zinc metal surface; and a zinc alloy surface.

In an embodiment, the zinc acetate 116b in solution is between 0.05 to 4 molar zinc cations (Zn²⁺).

In an embodiment, the additional acetate salt 116d in solution is between 0.05 to 30 molar acetate anions (CH3COO-).

In an embodiment, the additional acetate salt 116d includes at least one of: lithium acetate; sodium acetate; potassium acetate; magnesium acetate; calcium acetate; aluminum acetate; ammonium acetate; tetramethylammonium acetate; tetraethylammonium acetate; tetrabutylammonium acetate; and manganese acetate.

In an embodiment, the acetic acid 116c in solution is between 0.05 to 15 molar concentration.

In an embodiment, the aqueous electrolyte 104 includes at least one additive 116e dissolved in water 116a.

In an embodiment, the additive 116e in solution is between 100 to 100,000 ppm quantities.

In an embodiment, the at least one additive includes at least one chemical functional group of alkyl; alkenyl; alkynyl; phenyl; amine; hydroxyl; ether; thiol; aldehyde; ketone; ester; carboxyl; amide; siloxyl; halo; imine; and imide.

In an embodiment, the at least one additive 116e includes at least one of: ethylvanillin; sodium dodecyl sulfate; polyethylene glycol; dextrin; polyacrylamide; guar gum; and butanediol.

In an embodiment, the at least one additive 116e controls a morphology of the surface 118 of the negative electrode 102, wherein the surface 118 is one of: stripped; and plated.

In an embodiment, the aqueous electrolyte 104 includes a co-solvent.

In an embodiment, the co-solvent is an organic solvent.

In an embodiment, the organic solvent is one of: a non-polar solvent; and a polar solvent.

In an embodiment, the organic solvent in solution is between 0.05 to 90 percent concentration.

In an embodiment, the negative electrode 102 comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode 106 comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode 106 includes an active material 110 layer applied to the positive electrode 106 current collector.

In an embodiment, the active material 110 includes a metal oxide.

In an embodiment, the metal oxide includes redox active metal 110 centers of manganese, nickel, vanadium, cobalt, copper, iron, or chromium.

In an embodiment, the active material 110 includes an organic molecule.

In an embodiment, the organic molecule includes a quinone molecule.

In an embodiment, the aqueous electrolyte 104 has a pH between 3 and 6.

In an embodiment, a combination of an acetate salt and acetic acid is used to buffer a pH of the aqueous electrolyte 104.

In an embodiment, the cell further includes a separator between the negative electrode 102 and the positive electrode 106 to electrically insulate the negative electrode 102 and the positive electrode 106.

In an embodiment, the separator at least one of: is porous; and contains the aqueous electrolyte 104.

In an embodiment, an average discharge voltage of the cell is between 0.5 V and 1.8 V.

While the components depicted in Figure 1 are disposed directly on one another, it should be understood that other components may also be present. In particular, and in some embodiments, the electrolyte 104 may be absorbed within a separator layer (not depicted in Figure 1). Current collectors are also not depicted in Figure 1, which may be present in various embodiments.

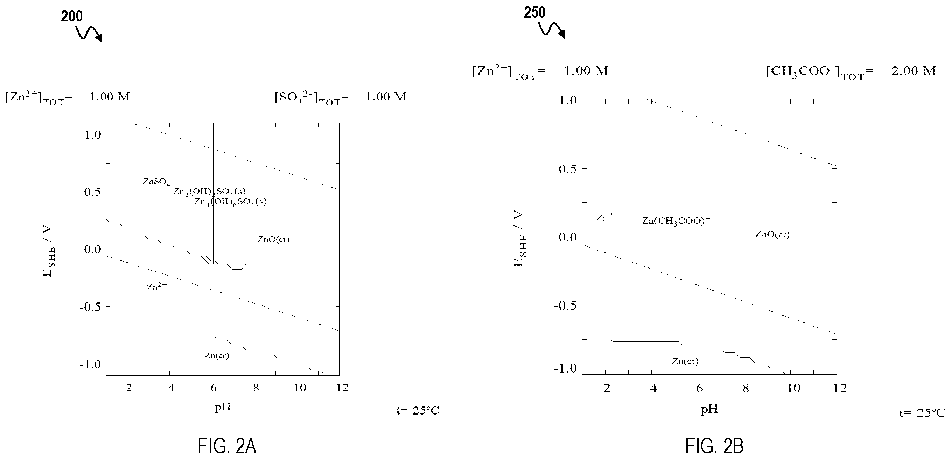

Referring now to Figure 2A, shown therein is a Pourbaix diagram 200 for an aqueous solution of zinc sulfate, according to an embodiment.

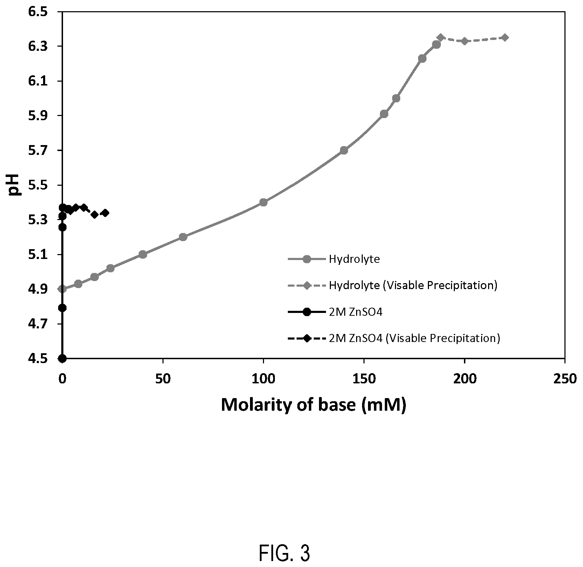

The diagram 200 predicts the formation of ZHS precipitates above pH ~ 5.5. A titration of a 2M ZnSO₄/H₂O solution may be conducted by adding a solution of sodium hydroxide (NaOH) dropwise with a burette (depicted in Figure 3).

White precipitate (ZHS) may be observed immediately after the first drops of NaOH are added and the pH may increase to 5.35 and stabilize there. The stabilization of pH may be effectively a buffering effect due to the formation of ZHS when adding OH⁻ to the ZnSO₄ solution.

Referring now to Figure 2B, shown therein is a Pourbaix diagram 250 for an aqueous solution of zinc acetate, according to an embodiment.

The diagram 250 predicts that no HDS may be formed in the system, even at higher pH values. The soluble Zn(CH₃COO)⁺ complex exists between pH=3 and pH=6.5 and solid ZnO exists at pH values higher than 6.5. A titration of an acetate-based electrolyte (E1 in Table 1) may be conducted by adding a solution of sodium hydroxide (NaOH) dropwise with a burette (depicted in Figure 3).

Almost 200 times more NaOH may be added vs. the 2M ZnSO₄ solution before a white precipitate (ZnO) observed. Once the white precipitate started to form, the pH remained constant at ~6.3 which is close to the pH predicted by the Pourbaix diagram 250.

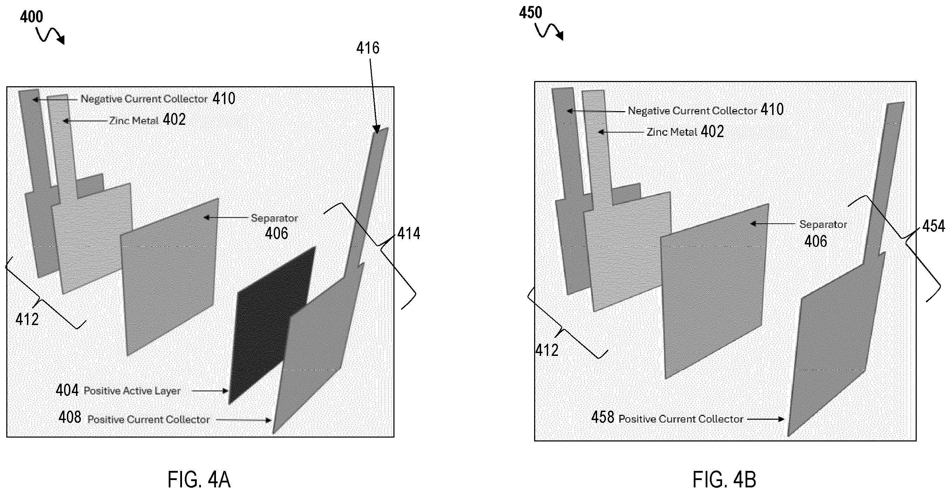

Referring now to Figures 4A and 4B, shown therein are schematics of the zinc-ion cell configurations used to evaluate electrolytes, according to an embodiment.

Figure 4A shows a full cell configuration 400 where zinc foil 402 may be used for the negative electrode 412 and electrolytic manganese dioxide may be used as the positive electrode 414 active material 404, according to an embodiment.

As an example, the negative electrode 412 may be the negative electrode 102 of Figure 1, and the positive electrode 414 active material 404 may be the positive electrode 106 active material 110 of Figure 1.

The full cell configuration 400 uses a positive electrode 414 and negative electrode 412 on either side of a separator 406. These components (excluding the tabs) are vacuum sealed in a standard polypropylene pouch cell material where 4mL of electrolyte may be injected into.

The pouch containing the stack may be placed between two stainless steel plates which apply an external pressure of 100 kPa with bolts and springs.

The positive electrode 414 current collector 408 may be a 50mm x 50mm piece of 25µm thick stainless-steel foil with a 100mm wide tab.

The current collector 408 may be coated with a 5µm thick carbon-based primer layer to ensure good adhesion properties and to prevent direct interaction between the stainless-steel current collector 408 and the electrolyte (not depicted).

A positive electrode slurry containing electrolytic manganese dioxide (EMD, sourced from Borman Specialty Materials), conductive carbon additives, and a binder dissolved in a solvent may be then cast onto the positive current collector 408 via doctor blade. The positive electrode 414 may be then calendared, giving a total thickness between 0.2-0.3mm.

The electrode tab 416 may be bare stainless steel which acts as a terminal for connecting to a battery cycler.

The negative electrode 412 may be made by laminating 60µm thick zinc foil 402 onto a piece of 25µm thick current collector 410 foil. The laminated foil may then be cut to be a 55mm x 55mm piece with a 100mm wide tab.

The separator 406 may be about 0.2mm thick with dimensions of 60mm x 60mm.

The separator 406 may be a glass fiber mat being ionic conductive and electrically insulating.

Figure 4B shows a half cell configuration 450 where brass foil serves as the positive electrode 454 and substrate for plating and stripping zinc metal, according to an embodiment.

The half-cell configuration 450 uses an inert current collector 458 as the positive electrode 454, the same negative electrode 412 used in the full cell, whist being separated by the same separator material 406 described for the full cell configuration.

These components (excluding the tabs) are vacuum sealed in a standard polypropylene pouch cell material where 4mL of electrolyte (not depicted) may be injected into.

The pouch containing the stack may be placed between two stainless steel plates which apply an external pressure of 100kPa via bolts and springs.

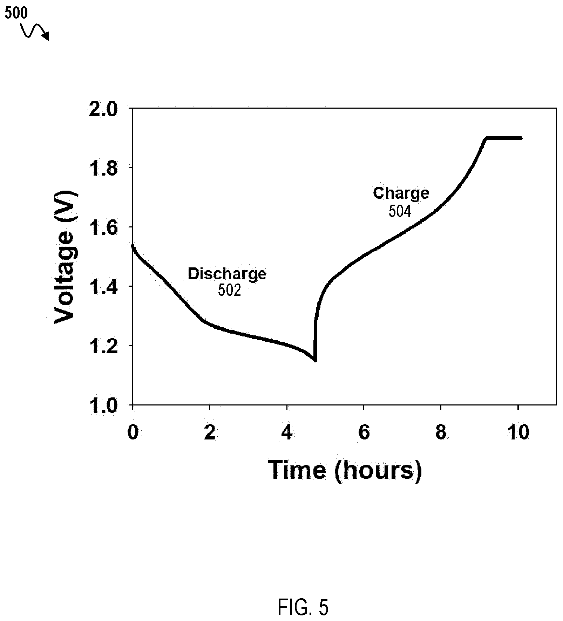

Referring now to Figure 5, shown therein is a graph 500 of the voltage profile for the first discharge 502 / charge 504 cycle of a zinc-ion cell, according to an embodiment.

The example electrolyte used has a composition of 1 M zinc acetate, 0.5 M acetic acid, 0.8 M sodium acetate, and 2 wt.% polyethylene glycol dissolved in water (E2 in Table 1).

The negative electrode current collector foil may be aluminum.

In an embodiment, acetate-based electrolytes enable the use of aluminum as current collectors. This may not have been possible with sulfate-based electrolytes due to electrochemical corrosion of aluminum.

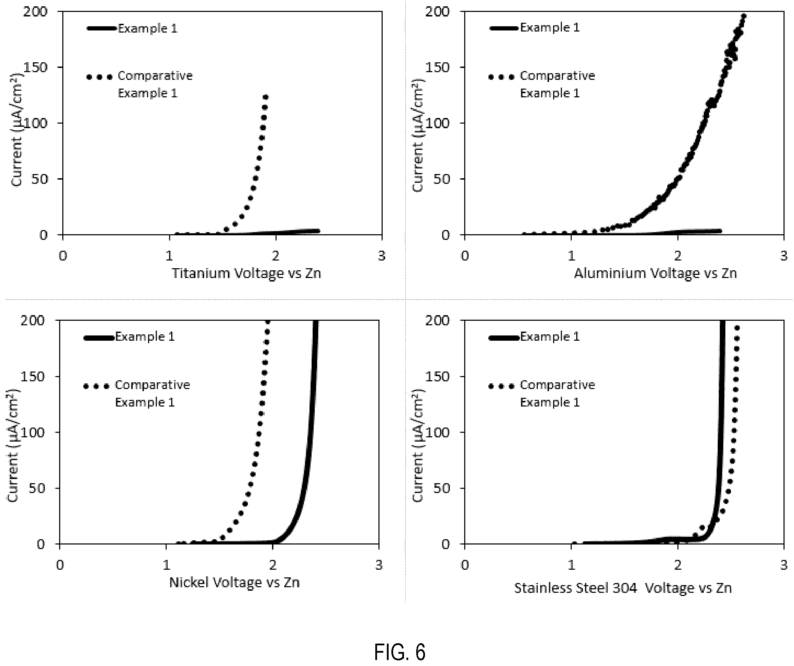

Referring now to Figure 6, shown therein are linear sweep voltammograms of cells with different positive electrode current collectors using the half-cell configuration of Figure 4B, according to an embodiment.

2M ZnSO₄/water electrolyte may be used as a comparative example and E1 is 1 M zinc acetate, 0.5 M acetic acid, and 0.8 M sodium acetate dissolved in water with no additives for smoothing the plated zinc morphology.

The electrochemical corrosion resistance may be enhanced or the onset voltage for the oxygen evolution reaction may be extended in all cases with the buffered acetate electrolyte compared to the sulfate-based electrolyte. This may enable the use of alternative, inexpensive, and lightweight current collectors to be used for the positive electrode of zinc-ion cells which may not have been possible with other electrolytes due to electrochemical corrosion at high voltages.

Additionally, since the onset for oxygen evolution from the splitting of water occurs at higher voltages with acetate-based electrolytes, the practical operating voltage window of zinc-ion cells is wider and may allow for the integration of higher voltage positive electrode active materials.

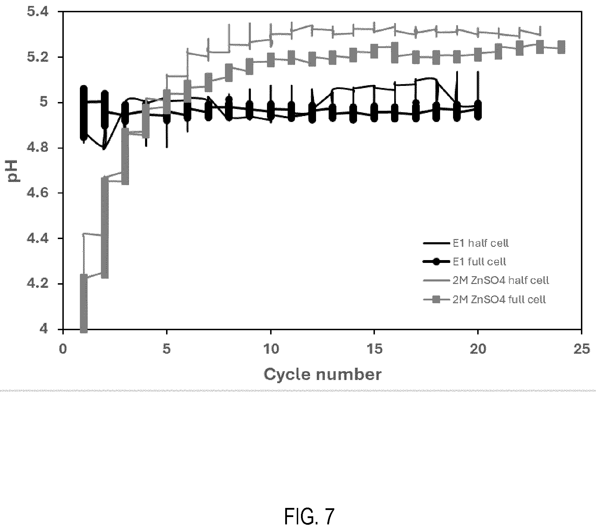

The buffering capacity of the acetate-based electrolytes listed in Table 1 may be sufficient to maintain the pH close to the initial pH of the electrolyte during cycling of a zinc-ion battery. Figure 7 depicts in-situ pH measurements for full cells and half-cells with 2M ZnSO₄ and a buffered acetate-based electrolyte (E1 in Table 1). With both electrolytes, the pH of the full cells may match closely with the half cells. The pH of the 2M ZnSO₄ electrolyte cells increased rapidly during the first several cycles.

Within 10 cycles, the pH may stabilize to about 5.3 which is consistent with the results of the titration (depicted in Figure 3), corresponding to the formation of zinc hydroxy sulfate (depicted in Figure 2A). Since the pH of the half cells match with the pH of the full cells, the increase in pH is mainly attributed to the reactions between the electrolyte and the zinc metal electrode (e.g. Zn → Zn²⁺ + 2e⁻, 2H₂O + 2e⁻ → H₂ + 2OH⁻).

The buffering effect of the acetate electrolyte (E1) is evident in Figure 7 where the pH remains very stable and close to the initial pH value during cycling. At this value (pH 4.8-4.9), no precipitates form during cycling. If only acetate anions are present in the electrolyte, no precipitates form at pH values less than approximately 6.3 which may be above the preferred pH range of 4-6 for zinc-ion cells.

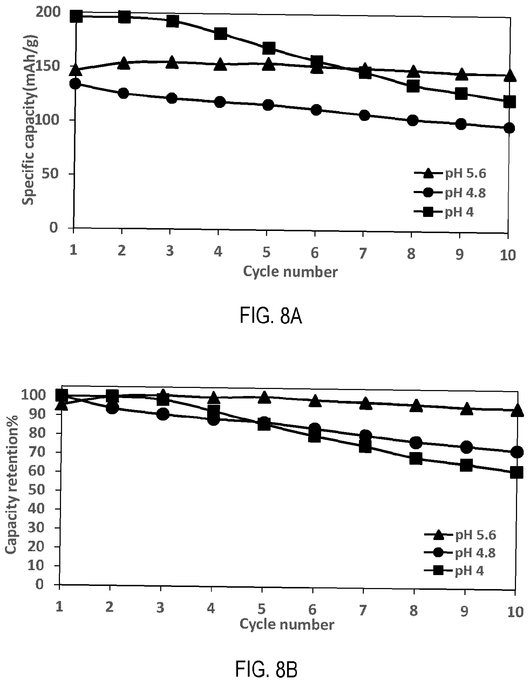

Referring now to Figures 8A and 8B, shown therein specific capacity (mAh/g) vs. cycle number (Figure 8A) and capacity retention (%) vs. cycle number (Figure 8B) for zinc-ion cells using acetate electrolytes buffered to different pH values (E1, E15, and E16 in Table 1), according to an embodiment.

The pH of the electrolyte may be controlled and tuned by changing the ratio of acetic acid and the non-zinc acetate salt.

The capacity may be slightly higher at lower pH values, yet the stability is slightly improved at higher pH values.

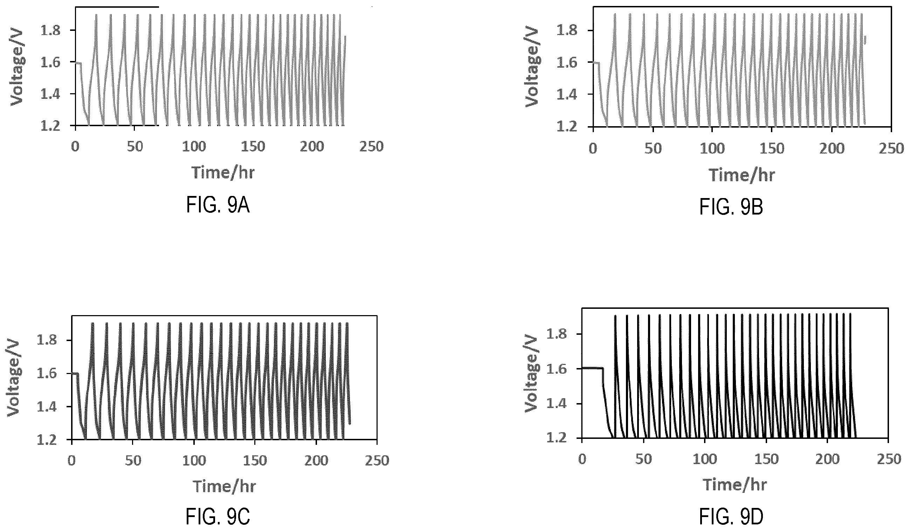

Referring now to Figure 9A-9D, shown therein are voltage vs. time plots of zinc-ion cells using electrolytes with different non-zinc acetate salts, according to an embodiment.

In Figure 9A, the electrolyte of contains 0.2M potassium acetate (E9 in Table 1); in Figure 9B, the electrolyte of contains 0.2M ammonium acetate (E11 in Table 1); in Figure 9C, the electrolyte of contains 0.2M lithium acetate (E13 in Table 1); and in Figure 9D, the electrolyte of (9D) contains 0.8M sodium acetate (E1 in Table 1).

As depicted, the cation of non-zinc acetate salt has a minimal effect on the cycling performance.

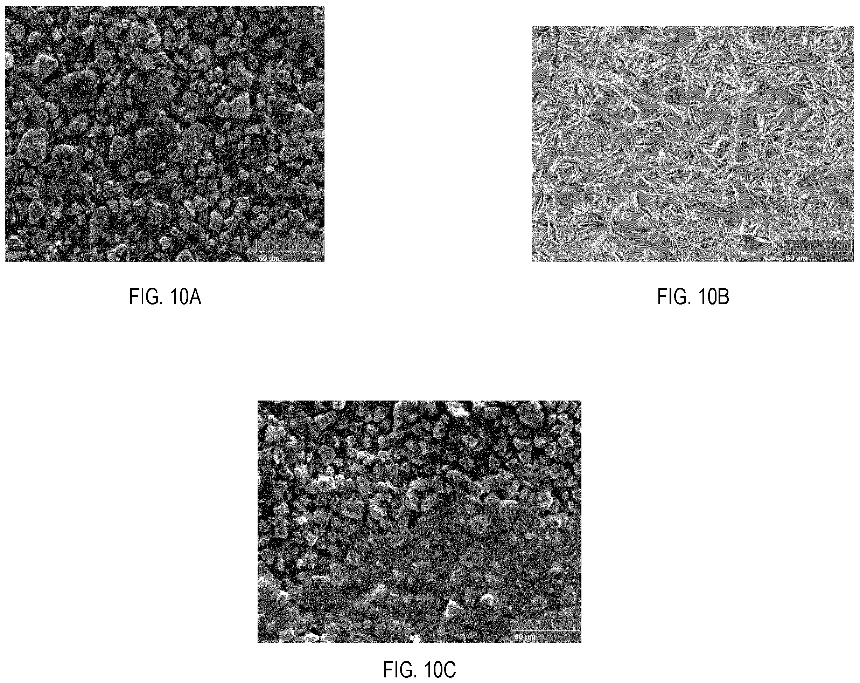

Referring now to Figures 10A, 10B and 10C, shown therein are scanning electron microscope images of positive electrode surfaces extracted from zinc-ion cells, according to an embodiment.

Visual evidence is provided of the formation and buildup of zinc hydroxy sulfate (ZHS) in the sulfate-based electrolyte.

In particular, Figure 10A shows the pristine positive electrode before cycling; Figure 10B shows the surface of a positive electrode covered by flakes of ZHS after cycling (10 cycles) a cell containing 2M zinc sulfate (2M ZnSO₄) in water electrolyte after 10 cycles; and Figure 10C shows the surface of a positive electrode uncovered by side product after cycling (10 cycles) a cell containing 1M zinc acetate + 0.5 M acetic acid + 0.8 M sodium acetate in water electrolyte (E1).

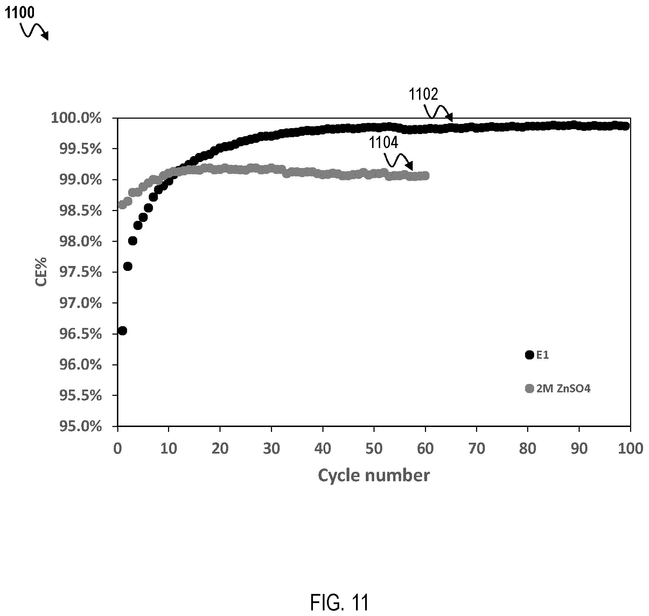

Referring now to Figure 11, shown therein is a graph 1100 of coulombic efficiency for plating and stripping zinc in half cells containing two different electrolytes, according to an embodiment.

The electrolytes used include an example acetate-based electrolyte (E1) 1102 and 2) a sulfate-based electrolyte (2M ZnSO₄) 1104. The average CE for E1 1102 is 99.8% vs. 99.2% for 2M ZnSO₄ 1104. This indicates less side reactions, such as hydrogen gassing and the formation of insulating precipitates (i.e., ZHS in the case of zinc sulfate) occurring between zinc metal and the electrolyte with the acetate-based electrolyte.

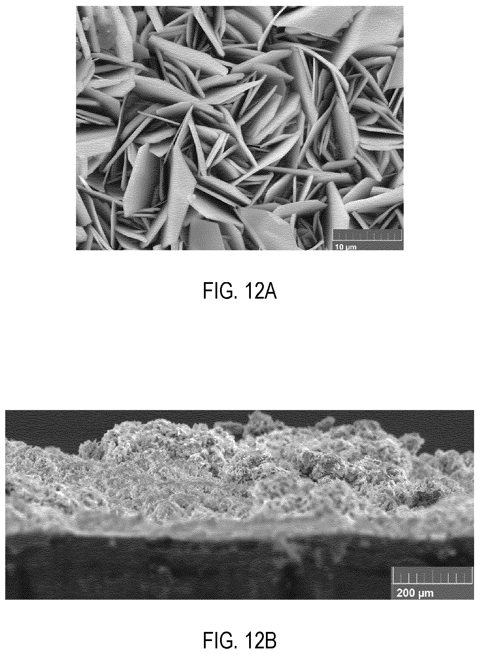

Referring now to Figures 12A and 12B, shown therein is the typical morphology of zinc after cycling in a sulfate-based electrolyte, according to an embodiment.

The morphology of the zinc electrode may be influenced by the electrolyte composition. In this example, the morphology may be observed 10 cycles in a half cell containing 2M ZnSO4/water electrolyte.

Figure 12A shows the surface of the zinc electrode in the plated state, while Figure 12B displays a cross-section of the same electrode.

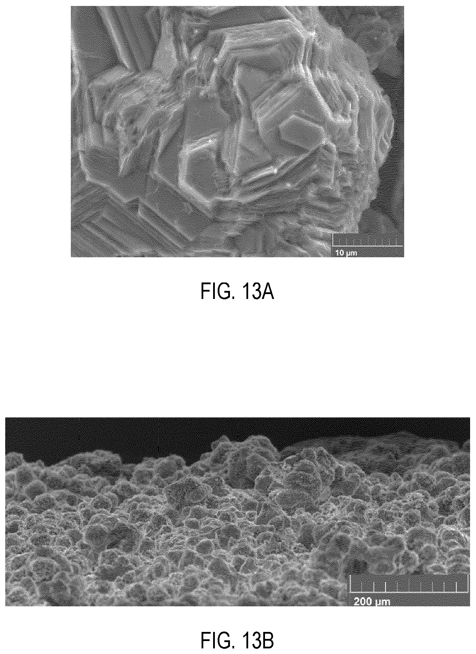

Very crystalline platelets are formed in sulfate-based electrolytes which are randomly oriented. The sharp edges of the zinc platelets can puncture through separators and limit the cycle life of zinc-ion batteries. The deposited zinc in acetate electrolytes (e.g., E1 shown in Figure 13) is still very crystalline, however, the platelets are more aligned parallel to the separator with less sharp edges facing perpendicular to the separator.

Like Adams with sulfate-based electrolytes, additives may be shown to smooth the morphology of plated zinc and extend the cycle life of zinc-ion cells.

Figures 13A and 13B depict the morphology of zinc after 10 cycles in a half cell containing 1 M zinc acetate, 0.5 M acetic acid, and 0.8 M sodium acetate dissolved in water electrolyte, according to an embodiment.

Figure 13A shows the surface of the zinc electrode in the plated state, while Figure 13B displays a cross-section of the same electrode.

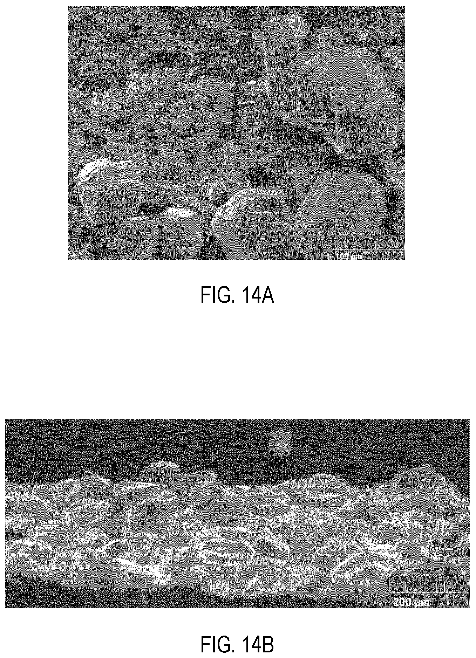

Referring now to Figures 14A and 14B, shown therein is the morphology of zinc after 10 cycles in a half cell containing 1 M zinc acetate, 0.5 M acetic acid, and 0.8 M sodium acetate with 3 wt. % polyethylene glycol (PEG) additive dissolved in water electrolyte, according to an embodiment.

Figure 14A shows the surface of the zinc electrode in the plated state, and Figure 14B displays a cross-section of the same electrode.

Several different additives may be tested to control and modify the morphology of the zinc electrode surface. Table 2 lists the average coulombic efficiencies (CE) calculated from plating and stripping zinc in half cells as well as the number of cycles before the cells short circuit.

Although the CE remained largely unaffected by the additives, all the additives tested extended the cycle life before short circuits occurred, even in low quantities (<5% in all cases). As a comparison, the average CE for the 2M ZnSO₄ may be only 99.2% and the cell lasted for 19 cycles before short circuiting.

**Table 2. Electrolyte compositions with additives to control the morphology of the zinc electrode surface.**

| Electrolyte | Control additive | Control additive concentration | Average coulombic efficiency (%) | Number of cycles before short circuit |
|---|---|---|---|---|
| E1 | - | - | 99.7 | 26 |
| E2 | Polyethylene glycol (PEG300) | 2 wt.% | 99.7 | 125 |
| E3 | Ethyl vanillin | 200 ppm | 99.5 | 27 |
| E4 | Sodium dodecyl sulfate (SDS) | 100 ppm | 99.8 | 39 |
| E5 | Dextrin | 3 g/L | 99.8 | 80 |
| E6 | Polyacrylamide (PAM) | 3 g/L | 99.6 | 64 |
| E7 | Guar gum | 1 wt.% | 99.6 | 115 |
| E8 | Butanediol | 2 vol.% | 99.8 | 50 |

While the above description provides examples of one or more apparatus, methods, or systems, it will be appreciated that other apparatus, methods, or systems may be within the scope of the claims as interpreted by one of skill in the art.

Elements of each embodiment may be incorporated into other embodiments, for example, configurations discussed in relation to one embodiment, may be applied to other embodiments disclosed herein.

Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A secondary electrochemical cell (100) for storing and delivering electrical energy, the cell comprising:
a negative electrode (102) comprising a surface exposed to an aqueous electrolyte (104);
the aqueous electrolyte for transferring zinc(ll) (Zn²⁺) ions between the negative electrode and a positive electrode (106), the aqueous electrolyte including:
zinc acetate (116b) dissolved in water;
an additional acetate salt (116d) dissolved in water;
acetic acid (116c) dissolved in water; and
the positive electrode undergoes a redox reaction with the Zn²⁺ ions (108);
wherein a combination of the additional acetate salt and the acetic acid is used to buffer a pH of the aqueous electrolyte.

2. The cell of claim 1, wherein the surface (118) is one of: a zinc metal surface (402); and a zinc alloy surface.

3. The cell of claim 1 or 2, wherein the additional acetate salt includes at least one of: lithium acetate; sodium acetate; potassium acetate; magnesium acetate; calcium acetate; aluminum acetate; ammonium acetate; tetramethylammonium acetate; tetraethylammonium acetate; tetrabutylammonium acetate; and manganese acetate.

4. The cell of any one of claim 1 - 3, wherein the aqueous electrolyte further includes at least one additive (116e) dissolved in water (116a).

5. The cell of claim 4, wherein the at least one additive (116e) includes at least one chemical functional group of: alkyl; alkenyl; alkynyl; phenyl; amine; hydroxyl; ether; thiol; aldehyde; ketone; ester; carboxyl; amide; siloxyl; halo; imine; and imide; or
wherein the at least one additive includes at least one of: ethylvanillin; sodium dodecyl sulfate; polyethylene glycol; dextrin; polyacrylamide; guar gum; and butanediol.

6. The cell according to any one of claims 1 - 5, wherein the aqueous electrolyte includes a co-solvent.

7. The cell of claim 6, wherein the co-solvent is an organic solvent.

8. The cell according to any one of claims 1 - 7, wherein the negative electrode (102) comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

9. The cell according to any one of claims 1 - 8, wherein the positive electrode (104) comprises a current collector, wherein the current collector is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

10. The cell according to any one of claims 1 - 9, wherein the positive electrode (104) includes an active material layer (404) applied to the positive electrode current collector.

11. The cell of claim 10, wherein the active material (110) includes a metal oxide.

12. The cell of claim 10, wherein the active material (110) includes an organic molecule.

13. The cell of claim 12, wherein the organic molecule includes a quinone molecule.

14. The cell according to any one of claims 1 - 13, wherein the aqueous electrolyte has a pH between 3 and 6.

15. The cell according to any one of claims 1 - 14, further including a separator (406) between the negative electrode and the positive electrode to electrically insulate the negative electrode and the positive electrode.
